# EUROPEAN PATENT APPLICATION

(11) **EP 0 903 577 A2**
(43) Date of publication of application: **24.03.1999**
(21) Application number: 98113036.2
(22) Date of filing: 14.07.1998
(51) Int. Cl.: G01N 29/02, G01N 25/00

(54) **Acoustic consumption monitor**

(30) Priority: 29.07.1997 US 902419
(71) Applicant: LEYBOLD INFICON, INC., East Syracuse, NY 13057 (US)
(72) Inventor: Gogol, Carl A., Jr., Manlius, New York (US); Wajid, Abdul, East Syracuse, New York (US); Rubloff, Gary, Ellicott City, Maryland (US)
(74) Representative: Leineweber, Jürgen, Dipl.-Phys.

(57) **Abstract**

A method of determining the reaction efficiency of a Chemical Vapor Deposition reactor whereby a gas combination enters the reactor and a solid reaction product is deposited as a thin film contained in the reactor. According to the invention, the inlet's composition of the gas combination is controlled or can be measured and a measuring device, such as an acoustic gas composition analyzer, calculates the outlet's gas composition. From these parameters and known information pertaining to the reaction chemistry, the reaction efficiency can be deduced. In addition, the reaction efficiency allows the growth rate of the thin film to be determined as well as the associated rates of the products exhausted from the reactor.

## Description

### FIELD OF THE INVENTION

The invention relates to chemical vapor deposition reactors, and in particular to a method and related apparatus for continuously determining the reaction efficiency of a chemical vapor deposition reactor. The reaction efficiency can then be used to determine an in-situ growth rate of a metalorganic or other material on a substrate as well as quantitative information relating to reacted and unreacted components exhausted from the reactor.

### BACKGROUND OF THE INVENTION

The process of Chemical Vapor Deposition (CVD) is extensively used to grow layers of various thicknesses of metals, semiconductors, dielectrics and the like. The CVD process typically requires that the desired growth materials be attached to a ligand, or volatile adduct, that allows the transport of the desired species in the gas phase to a reaction zone in a reactor where a substrate(s) is located. This complex molecule is referred to as the precursor. Different materials have different precursor structures.

Once in the reaction zone, a portion of the volatile precursor compound is decomposed, separating the volatile portion of the compound from the non-volatile portion, and leaving behind the desired solid deposit on the substrate. Typically, the decomposition reaction is driven thermally; that is, the substrates are heated to a sufficiently high temperature such that when the volatile compound contacts the substrate, sufficient energy is made available to break the connectivity between the volatile ligand and the desired atom. The desired atom remains deposited on the substrate, while the volatile portion of the precursor gas is then exhausted from the reactor through an exit port. While thermal energy is the most obvious means for performing the deposition reaction, it should be noted that CVD explicitly includes chemical vapor deposition processes assisted by other excitation means, including plasma discharge and photo-assisted means, among others, both in the reactor and by upstream excitation of the source gasses before they enter the reactor.

The engineering design of CVD reactors is based on: (1) the transport and even distribution of the volatile species over the entire area of substrate(s) and (2) the creation of an even temperature over the entirety of the substrate(s). Should these two criteria be met, the desired material will grow at a predictable rate evenly over the substrates. With experience, the producer learns the proper settings of precursor flow, temperature, and time to produce the correct thickness of the desired film.

To date, there is no apparatus available to a producer to verify that each of the learned parameters of flow and temperature are correct. The producer must verify through trial and error that the thickness is correct after a growth run is complete and the substrates have been removed from the reactor.

In addition, there is currently no means for determining a reactor's utilization efficiency; that is, to determine how much of the precursor gas is consumed. This particular metric is increasingly important for controlling the cost of consumables. This efficiency is also important to the environmentally conscious in order to understand information about the products exhausted from the reactor.

### SUMMARY OF THE INVENTION

A primary object of the present invention is to determine the exhausted reacted and unreacted by-products of any reaction process.

Another primary object of the present invention is to improve chemical vapor deposition (CVD) reactors.

Another primary object of the present invention is to quantitatively deduce the efficiency of a CVD reaction.

It is still another primary object of the present invention to be able to determine an in-situ growth rate and thickness of the thin film onto a substrate in a CVD reactor.

Therefore, and according to a preferred aspect of the present invention, there is described a method of determining the reaction efficiency of a chemical vapor deposition reaction of a reactive gas in a reactor, said gas leaving a solid reaction product deposited as a thin film onto a substrate in said reactor, the method comprising the steps of:
measuring the gas composition at the outlet of said reactor; and
determining the reacted fraction of gas from the inlet and outlet gas compositions.

Preferably, the reactive gas is a mixture that includes at least one reactive precursor with or without at least one carrier gas. In the instance where a single reactive precursor is used, the inlet composition is known. Otherwise, the process includes the steps of controlling the inlet composition of the gas mixture and determining the reacted fraction of the gas mixture by comparison of the measured inlet and outlet compositions of the gas mixture.

According to another preferred aspect of the present invention, there is described a method of determining the growth rate of a thin film onto a substrate in a reactor based on a chemical vapor deposition of a reactive gas entering the reactor, the method comprising the steps of:
measuring the composition of the reactive gas at an inlet port of the reactor;
measuring the composition of the reacted gasses and unreacted gasses at an outlet port of the reactor;
determining the reacted fraction of the precursor gas from the measured compositions at the inlet and the outlet of said reactor;
determining the mass flow rate of precursor entering said reactor; and
determining the rate of reacted product deposited onto said substrate.

Preferably, the above method utilizes, but is not limited to, a reactive gas mixture containing at least one precursor and at least one carrier gas.

According to yet another preferred aspect of the present invention, there is described a method of calculating the composition of gasses exhausted from a chemical vapor deposition reactor, said method comprising the steps of:
measuring the inlet composition of said gas composition;
measuring the composition of the gas mixture at the outlet of said reactor;
determining the reaction efficiency of the reactor from the measured inlet and outlet gas compositions;
determining the unreacted fraction of the exhausted gas components;
determining the composition of the reacted gas components; and
adding the reacted and unreacted gas components to determine the total exhausted gasses.

In yet another preferred aspect of the present invention, there is described a method for evaluating the efficiency of a chemical vapor deposition reactor for a reaction including at least two precursors, such as the case of oxygen (O₂)and TEOS (tetraethoxysilane), comprising the steps of:
measuring the mass flow rates and composition of the precursors at the inlet port of the reactor;
measuring the composition of the reacted gasses at an outlet port of the reactor; and
determining the reacted fractions of the precursor gasses from the compositions as measured at the inlet and outlet of the reactor.

An example is described for oxygen and TEOS yielding silicon dioxide in a plasma enhanced CVD reactor (PECVD) $\text{Si} \text{(} {\text{OC}}_{\text{2}} {\text{H}}_{\text{5}} {\text{)}}_{\text{4}} \text{+ 5} {\text{O}}_{\text{2}} \text{→} {\text{SiO}}_{\text{2}} \text{+ 2} \text{CO} \text{+ 10} {\text{H}}_{\text{2}} \text{O}$in which SiO₂ is the solid product. The reaction inputs will generally have excess oxygen, that is greater than stoichiometric, to facilitate the growth of high quality material in a plasma process. Therefore, the exhaust stream will have:$\frac{\text{w}}{\text{5}} \text{CO} \text{+} {\text{wH}}_{\text{2}} \text{O} \text{+} {\text{x}}_{\text{1}} \text{Si} \text{(} {\text{OC}}_{\text{2}} {\text{H}}_{\text{5}} {\text{)}}_{\text{4}} \text{+} {\text{yO}}_{\text{2}} \text{+} {\text{zO}}_{\text{3}} \text{.}$ where w, x, y, and z are related to the mass quantities of gases in the exhaust stream. The quantities of CO and H₂O are related in the ratio of 1:5 because they predominately result from the disassociation reaction, the abundance of these species resulting from wall desorbtion or outgassing being insignificant.

The present invention can also be applied to thermal CVD processes conventionally carried out in hot-wall quartz furnace tubes including but not limited to the following conventionally standard manufacturing processes:
oxide from TEOS at low pressure; PSG, BSG, BPSG - i.e.: TEOS oxide with boron and/or phosphorus doping; silane-based oxide (using SiH₄ or higher silanes, with O₂ or N₂O); silane-based nitride (using SiH₄ or higher silanes, with NH₃); polysilicon or silicon epitaxy from SiH₄, Si₂2H₆, or other silanes, or from Cl-containing silicon precursors (e.g.: SiCl₄, SiCl H₃, etc.).

According to yet another preferred aspect of the present invention, there is provided an apparatus for determining the reaction efficiency of a chemical vapor deposition reactor, said reactor having a defined cavity for retaining at least one substrate onto which is deposited a solid reaction product from a reacted binary gas mixture e.g. $\text{(} \text{aA} \text{+} \text{bB} \text{⇄} \text{cC} \text{+} \text{dD} \text{),}$said reactor further including an inlet port and an outlet port, said apparatus comprising:
means for determining the composition of said gas mixture at the outlet port of the reactor;
means for determining the composition of said gas mixture at the inlet port of the reactor;
   wherein said outlet composition determining means is an acoustic cell capable of measuring relative differences in the speed of sound for gasses passing therethrough, in which the reacted product is derived from the relation: 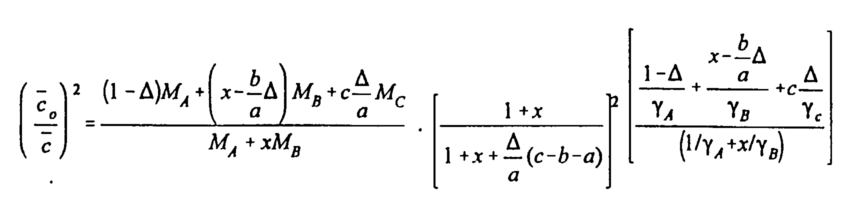 in which:
Δ = reacted product (reacted fraction of species A);
*M*_{*A*}, *M*_{*A*}, *M*_{*C*} = molecular weights of species A, B, C;
γ_{*A*}, γ_{*B*}, γ_{*c*} = specific heat ratios of species A, B, C;
**x** = mole ratio of A in B; and 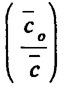
is the ratio of the speed of sound of the gas mixture between a reacted mode and a bypass mode.

According to a preferred embodiment, a pair of acoustic cells are used to determine the compositions of gas at the inlet and outlet of the reactor, respectively. However, other apparatus or methods may alternately be utilized, such as mass spectroscopy, atomic absortion, gas chromatography, etc, capable of accurately measuring the inlet and outlet composition.

As is known, an acoustic cell can be used to determine the composition of a binary gas mixture from knowledge of the molecular weights of the gasses in a particular gas mixture, their individual specific heat ratios (Cₚ/Cᵥ), and the measurement of the speed of sound. A more complete description of an acoustic cell used in conjunction with chemical vapor deposition processes can be found in copending and commonly assigned USSN 08/748,599, entitled: ACOUSTIC SENSOR FOR IN-LINE CONTINUOUS MONITORING OF GASSES, filed November 13, 1996, the entire contents of which are hereby incorporated by reference.

According to this invention, and by calculating the consumption of precursor within the reactor based on a specific chemistry; that is, by determining the reaction efficiency, a number of benefits can be derived. These benefits include a determination of the growth rate of thin film material, which can be determined from quantitative information derived from a pair of acoustic cells, or comparable apparatus disposed at the inlet and the outlet of the reactor, and either a knowledge of the reaction chemistry or some independent empirical determination of the absolute efficiency of the acoustic cell measurement.

In addition, by understanding the reaction efficiency, and also by using acoustic cells or other device capable of determining gas composition data at the outlet of the reactor, information relating to the exhausted gas composition can be derived. Knowledge of the species and quantity of emission gasses allows determination of this "efficiency" parameter, which is becoming increasingly important from an environmental standpoint stemming from growing awareness of producers, as well as promulgated standards implemented by groups such as the Environmental Protection Agency, among others.

According to a preferred embodiment of the invention, a frequency ratio related to the speed of sound ratio (*c*/*c*_{*o*}) is measured at the outlet of the reactor by a first acoustic cell while a second acoustic cell measures the inlet composition of the binary gas combination at the inlet; that is, an arriving composition ratio at the reactor inlet. According to the present method, a derivation of the reaction fraction (Δ) can then be calculated from this data alone for each reaction process. The above information provides the reactor's efficiency. Using the derived information for the quantity of the reacted product, along with independent knowledge of the inlet's total molar flow rate, the total area of the substrate, and other known information related to the structure of the resulting thin film, the growth rate of the thin film can then also be derived.

In addition to deriving the thin film's growth rate, information pertaining to the reacted and unreacted products exhausted from the reactor can also be derived using the reaction efficiency, as well as known information pertaining to the mass flow entering the reactor chamber and the dominant chemical reaction in a manner described in greater detail below.

Alternately, the above information could also be obtained using a single acoustic cell and by either reducing the temperature, or otherwise turning off the reaction, or by adding a by pass line.

An advantage of the present invention is that the thin film growth rate onto a substrate, such as, resulting from a chemical vapor deposition reaction, can be calculated easily and quickly using known data and at least one test cell capable of determining the composition of the gas mixture.

Another advantage of the present invention is that a quantitative analysis of the reaction at the inlet and outlet ports of the reactor is useful in calculating the reaction efficiency and thereby determining information relating to the exhaust product, including the presence of unreacted gasses resulting from an uncompleted reaction.

These and other objects, features, and advantages will now be described in the following Detailed Description of the Invention as read with the accompanying drawings.

### BRIEF DESCRIPTION OF THE DRAWINGS

FIG. 1 is a diagrammatic view of a CVD reactor system having measurement apparatus arranged according to a specific embodiment of the present invention;
FIG. 2 is a pictorial cross-sectional view of an acoustic cell used in accordance with the system illustrated in FIG. 1; and
FIG. 3 is a graphical representation of a nomograph created for a specific binary gas mixture used in accordance with the system of FIGS. 1-2;
FIG. 4 is a pictorial diagram of a mass flow controller used in the apparatus of FIG. 1;
FIG. 5-6 are alternate schematic views of by pass gas flow; and
FIG. 7 is a schematic view of an internal sampling method from the reactor; and
FIG. 8 is a partial schematic view of an alternate precursor - carrier gas introduction to a reactor.

### DETAILED DESCRIPTION OF THE INVENTION

The following description relates to a particular preferred embodiment utilizing a specific chemical vapor deposition (CVD) reactor and a known reaction chemistry. It will be readily apparent that other alternate embodiments using the concepts described herein can be easily imagined by one of ordinary skill in the field.

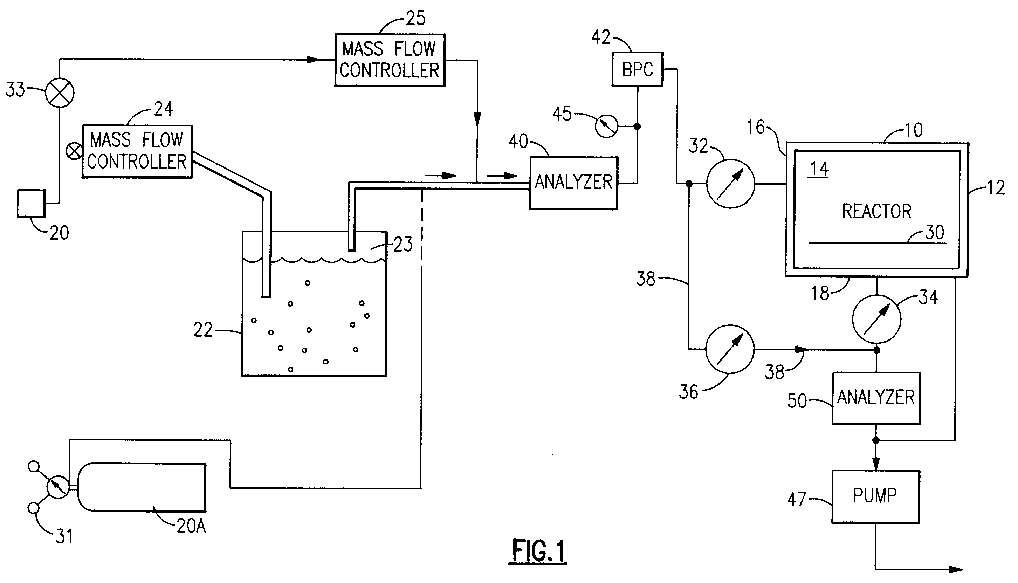

Referring to the FIGS., and specifically to FIG. 1, there is shown a diagrammatic view of a CVD reactor 10 in accordance with a preferred embodiment of the present invention. The CVD reactor 10 includes a housing 12 having an internal cavity or chamber 14 and respective inlet and outlet ports 16, 18. According to this embodiment, a carrier gas bottle 20 is interconnected to a bubbler chamber 22 containing high purity liquid or solid as CVD precursor. The bubble chamber 22 is designed to allow carrier gas flow through the precursor while some small amount of the precursor evaporates into the carrier gas. The flow of the carrier gas (H₂ according to this embodiment) into the bubble chamber 22 is controlled by a first mass flow controller 24 at a fixed rate and pressure, by known means.

The precursor is picked up from the liquid and leaves the bubble chamber 22 in gaseous form with the carrier gas obtained from the headspace 23. A dilution flow of gas can be carried in a parallel circuit by opening an adjacent valve 33 into a second mass flow controller 25.

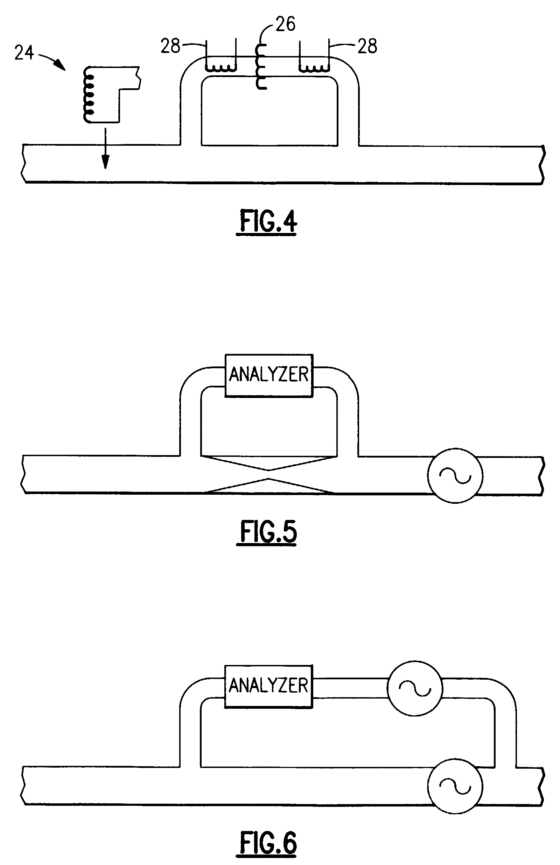

According to the present embodiment, the mass flow controllers or flow meters 24, 25 each include a pair of fine platinum resistance thermometers 28 spaced an equal distance from a small heater element 26, as shown more particularly in FIG. 4. The output from the thermometers 28 control an adjacent solenoid-controlled leak valve 35, in a manner commonly known to those in the field. In passing, some types of precursors can be alternately supplied directly by a gas bottle 20A having an attached pressure regulator 31, as shown.

Alternatively, and referring briefly to Fig. 8, some CVD processes utilize direct conversion of the precursor from the liquid state to the vapor state by the careful quantitative metering of the liquid precursor from a source 15, such as using an injector 17 and its subsequent vaporization by a vaporizer 37. This vapor is usually carried to the reactor's chamber 10A by a carrier gas, such as hydrogen, oxygen, ammonia (NH₃) or argon added to the vaporizer 37 from a supply 29, as monitored by an inline mass flow controller 27.

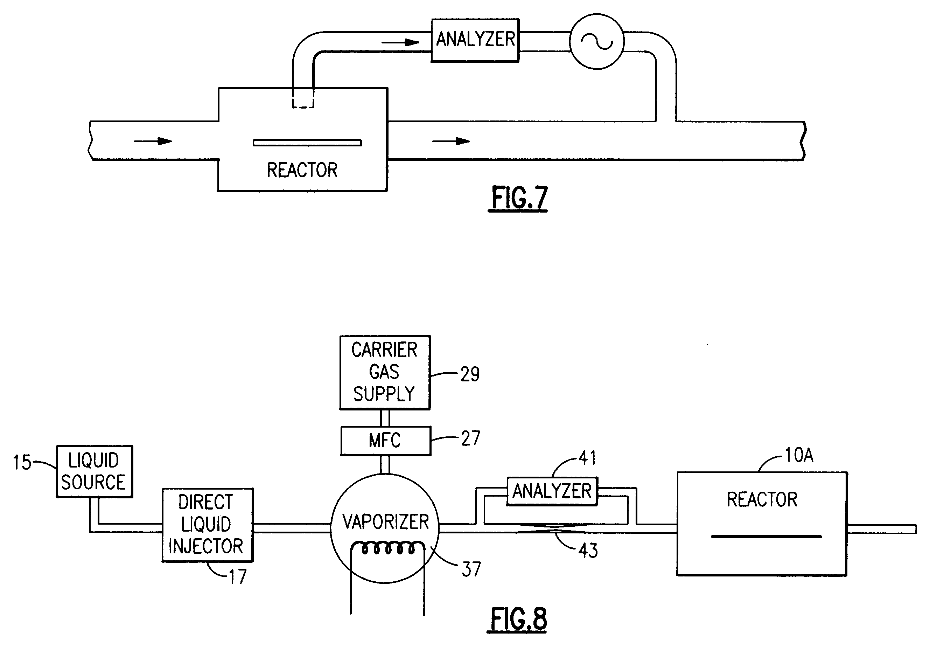

One example of large commercial interest is oxygen (O₂) and TEOS. It is consequently important to know the composition ratio of this mixture as it is carried to the reactor. Again, it is possible to pass all of the mixture through the analyzing means, but in many cases it will be necessary to draw only a representative sample through the analyzer 41 because of flow limitations through the sensor. The flow restriction, shown as 43, is used to ensure some portion passes through the acoustic cell. In these cases, a bypass mode of operation will be necessary and can be implemented as described in greater detail below, according to Figs. 5, 6 or 7 as circumstances dictate.

Referring back to FIG. 1, a first acoustic gas composition cell 40 is positioned adjacent the inlet port 16 external to the reactor 10, while a second acoustic gas composition cell 50 is similarly positioned adjacent the outlet port 18. A by-pass line 38 interconnects the first and second acoustic cells 40, 50 bypassing the reactor 10. Though the acoustic cells described by this embodiment are essentially identical, this limitation is not critical to the workings of the present invention. That is, the cells, for example, may vary in size and configuration. A back pressure controller 42 having an external pressure gauge 45 is used for maintaining the pressure in the bubbler 22 constant and thereby aiding the stability of precursor pickup by the carrier gas.

Within the housing 12 of the reactor is a substrate 30, typically made from silicon or other materials such as GaAs or even various metals or glasses. The reactor 10 also includes means (not shown) for uniformly heating the substrate 30 to a reacting temperature. Valves 32, 34, and 36 control the flow of the gas mixture into and out of the reactor cavity 14, and the by-pass line 38, respectively. An exhaust pump 47 or other means, such as a blower, guides the exhausted materials from the acoustic cell 50 to atmosphere. Often, for example, exhaust gases are routed through "scrubbers" (not shown) to break down complex organic molecules to harmless simple ones.

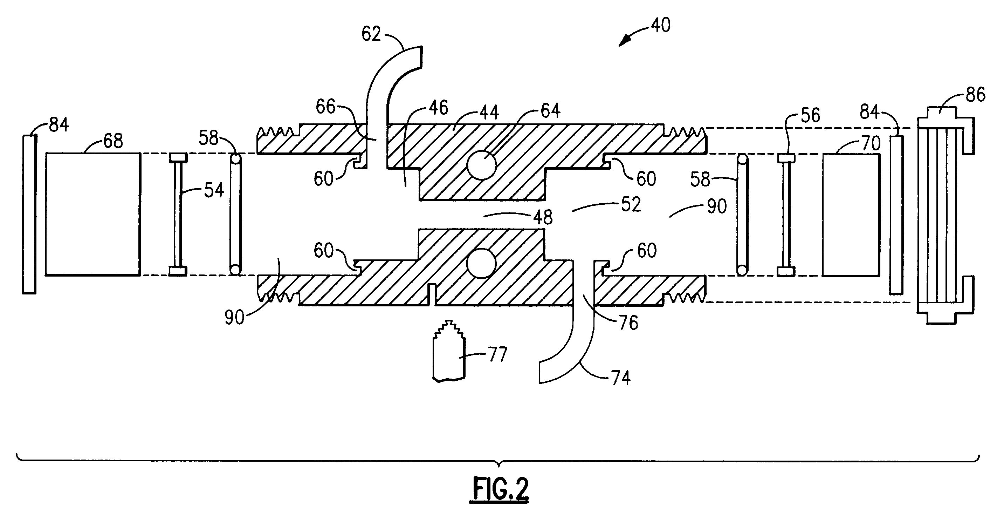

Referring to the exploded FIG. 2, each of the acoustic cells 40, 50 include a housing 44, preferably made of a metallic material and including a plurality of acoustic cavities 46, 48, and 52, forming a resonator chamber 64. For the sake of convenience, only acoustic cell 40 is now shown and described. First and second diaphragms 54, 56 preferably made from a non-oxidizing and non-reacting metal alloy, such as INCONEL, are installed in the housing 44, using a sealing O-ring 58, which is fit into a groove 60. The groove 60 is designed to make a leak tight seal when a diaphragm 54, 56 is sufficiently pressed into it to provide metal-to-metal contact with the front surface of the groove. A gas inlet tube 62 is connected to the acoustic cavity 46 via a gas inlet 66, while a corresponding gas outlet tube 74 is connected to the acoustic cavity 52 via gas outlet 76. A pair of heater mounting holes 64 are preferably drilled through the housing 44 to maintain the cells 40, 50, Fig. 1, at a given temperature within about 0.1° C or less of the set point as measured by a platinum RTD 77. In use, a driving means, such as a microphone 68, at one end of the cell housing 44 sends an acoustic signal through the gas flowing through the cell housing 44 which is received by a microphone 70 or other receiving means at the other end of the cell housing. The microphones 68, 70 are inserted into a chamber 90 provided on either side of the housing 44. End washers 84 retain each microphone 68,70, along with an additional housing 86, (only one side shown), and provide sufficient force to compress the O-ring 58.

It is also possible to directly excite the driving diaphragm 68 by electrostatic coupling means (not shown) or the direct application of a piezoelectric material (not shown) on the diaphragm. It is also possible to detect the motion of the receiving diaphragm 70 directly by capacitive displacement measurements or by using piezoelectric film material (not shown) directly applied to the diaphragm to induce electrical signals which can be measured.

As described in greater detail in co-pending and commonly assigned USSN 08/748,599, previously incorporated by reference, the gas is flowed through the acoustic cell and a driving acoustic signal is transmitted through the gas where the signal is received on the other end. The acoustic signal is converted into an electrical signal which is subsequently processed by circuitry (not shown) to detect a resonant frequency resulting from the specific gasses and their composition ratios. Based on this resonant frequency and the resonant frequency of the pure carrier gas, the composition of the binary gas mixture can be calculated. Additional details regarding the operation and features of the acoustic cell 40 are provided in the above cross-referenced application.

With the above backdrop of the apparatus presented, some additional technical background is herein provided. As is known, an analysis of the composition of a gas is achieved by the measurement of the speed of sound in a specific gas media using an acoustic gas composition analyzer or cell as shown as reference numerals 40, 50 and briefly described above. For ideal gases and dilute mixtures of non-ideal gases in ideal gases, such as used in the Chemical Vapor Deposition(CVD)reactor 10, for a mixture of gasses the speed of sound $\overline{\text{c}}$ is given by the equation: 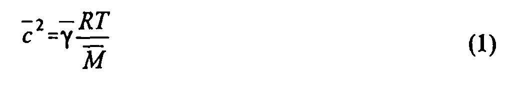 where $\overline{\text{γ}}$ is the average specific heat ratio of the gas mixture, $\overline{\text{M}}$ is the average molecular weight of the gas mixture, R is equal to 8311.7 mks units (commonly referred to as the Universal Gas Constant), and T is the temperature as measured in degrees Kelvin.

If the mole fraction of the precursor gas contained in a carrier gas is ***x***, then the average specific heat ratio $\overline{\text{γ}}$ is written as the weighted harmonic average: 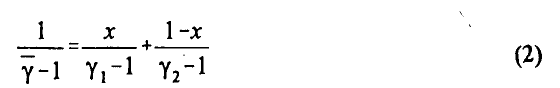 which can be rewritten as:

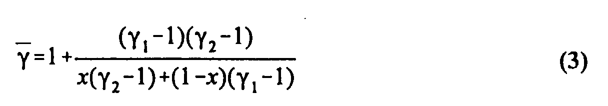

The average molecular weight, $\overline{\text{M}}$, is the simple weighted average: 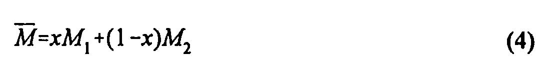 in which the subscripts 1 and 2 denote the precursor gas and the carrier gas, respectively. The mole fraction information for a given binary gas combination is obtained from equations (1) through (4) as follows. For convenience, the following quantities are defined:

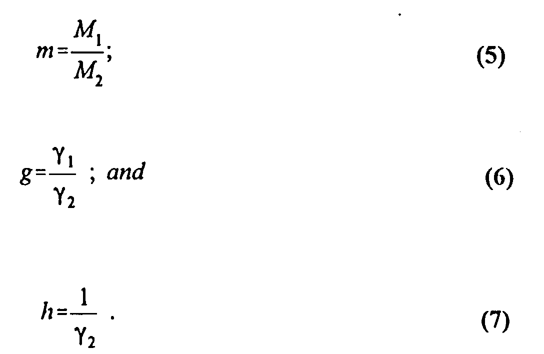

Substituting the values of equations (5)-(7) into equations (1)-(4):

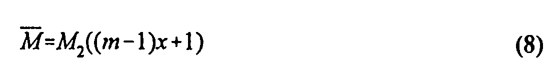

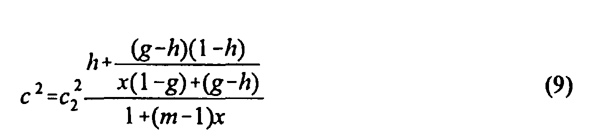

From equation (1), we obtain:

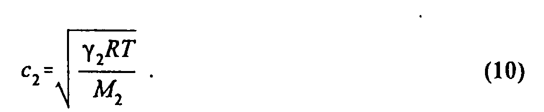

In addition, for a binary combination of gases:
if n₁ = number of moles of gas A and n₂=number of moles of gas B entering the system, and:
*x* = mole ratio or mole fraction of source gas such that:

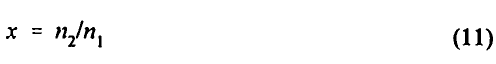

In general, it is known that a chemical reaction of the form 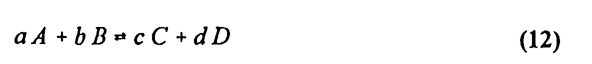 may be rewritten as: 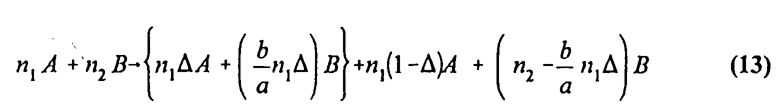 where Δ = fraction of component A which undergoes reaction.

Rewriting: 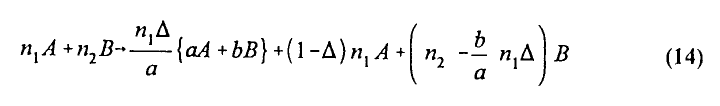 or 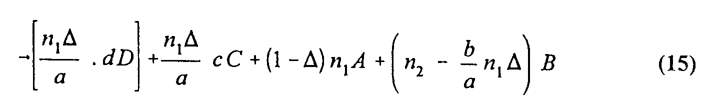 in which 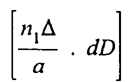 is the solid portion that would not be available in the gas phase for analysis.

The gas composition after reaction is therefore: 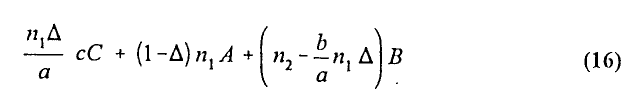 having three components A, B, C in the proportions of *n*₁(1-Δ), *n*₁(*x*-*b/a* Δ) *and n*₁$\frac{\text{c}}{\text{a}}$Δ, respectively.
The important gas-related parameters are found as:
a) 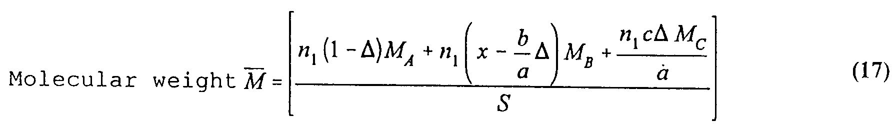 where 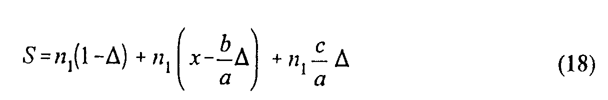 rewriting: 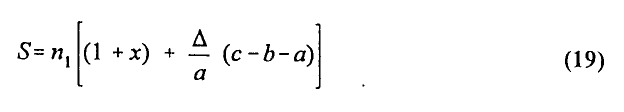
b) The specific heat ratio $\overline{\text{γ}}$ is obtained from the following: 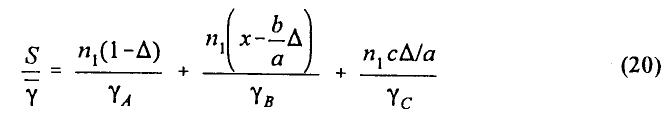 Where γ_{*A*}, γ_{*B*}, γ_{*C*} respectively represent specific heat ratios for the gas species A, B, and C.

Because we know the speed of sound **c** is given by equation (1): 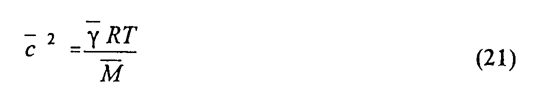 rewriting: 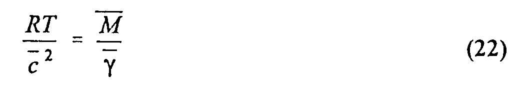 Therefore: 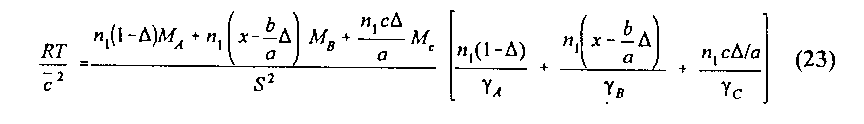 which equals:

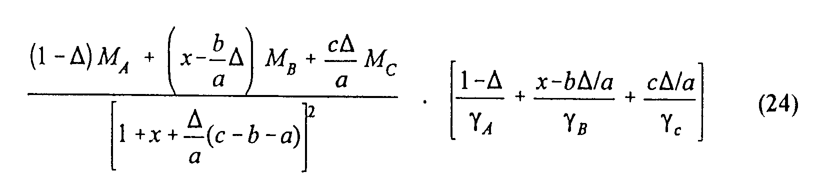

Many means of instrumental analysis are not capable of analyzing all of the gasses flowing into a reactor. In this case, the gas flow is split, with only part of the gas flow through the instrument. This bypass mode of operation, or this splitting of the gas flows, will be accomplished by either the natural flow division that comes from impedance ratios of the measurement instrument's flow to the main flow channel, as shown in Fig. 5, or by the flow induced through an instrument by a pump means; see Fig. 6.

In either case, it is important to insure that the sample is represented of the total flow to or from the reactor. In some special cases, it might be appropriate to draw a sample from a specific position within the reactor as shown in Fig. 7.

In the described bypass mode, no reaction takes place so the inlet's composition equals the outlet's composition and the average molecular weight for this special case is $\overline{{\text{M}}_{\text{o}}}$ given as: 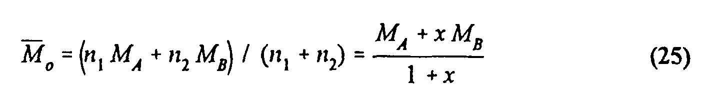 and the specific heat ratio γ_{*o*} for this special case is: 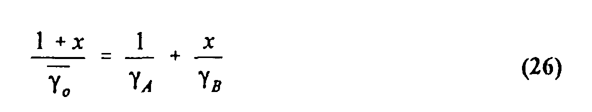 Therefore: 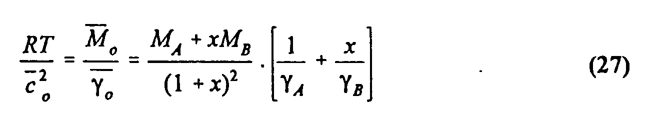 Combining, the ratio of speeds of sound between the bypass mode and the reaction mode produces the following equation:

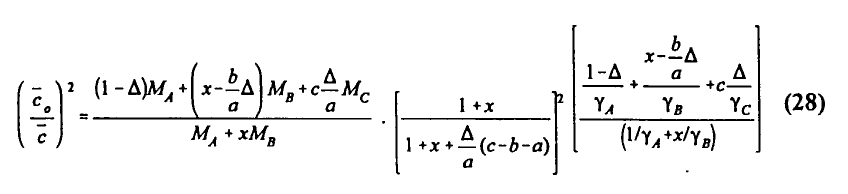

Therefore, and according to the above relationship, the frequency ratio at the outlet port 16 of the reactor 10 can be determined for a given reaction and inlet mole fraction. For purposes of the present invention, the decomposition reaction for tungsten hexafluoride and hydrogen having the below reaction equation is herein provided as a working example:

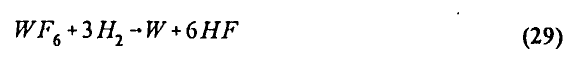

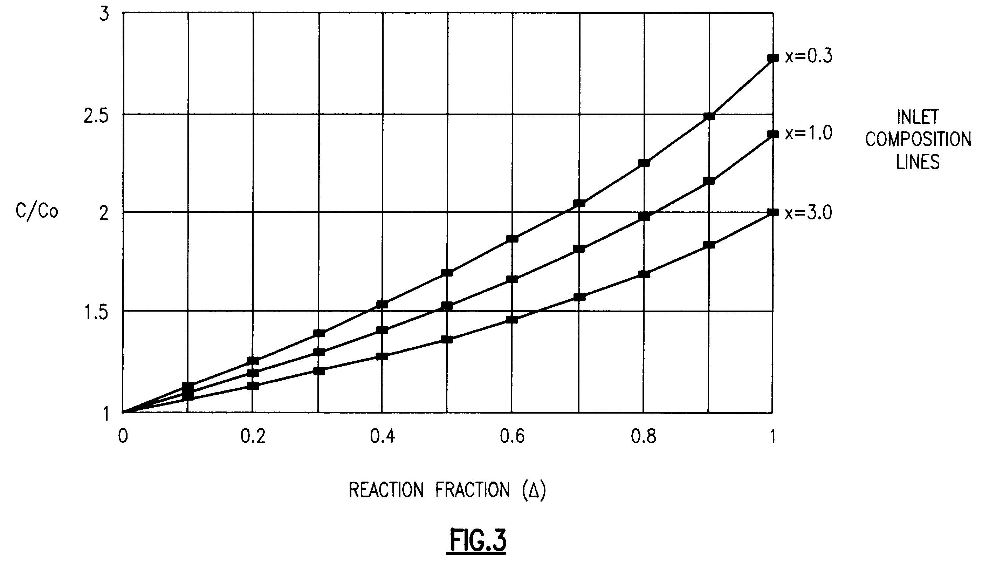

The following parameters are known for each of the reaction components:
M_{A}=molecular weight of WF₆ = 297
M_{B}=molecular weight of H₂ = 2
M_{C}=molecular weight of HF= 20
a=1
b=3
c=6
γ_{*A*} = specific heat ratio of WF₆ = 1.16
γ_{*B*} = specific heat ratio of H₂ = 1.41
γ_{*C*} = specific heat ratio of HF= 1.41
Therefore, substituting each of the above values into equation (28) above yields: 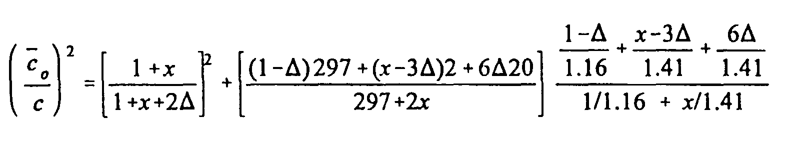 thereby producing the graphical representation or nomograph shown in Fig. 3.

Using the graphical information presented by Fig. 3, and according to this preferred embodiment, the reaction fraction (Δ) can be derived using the acoustic cells 40, 50 provided at the inlet and outlet ports 16, 18 of the reactor 10, as follows:

First, the inlet composition **(*x*)** of the binary gas composition is measured and/or controlled by the acoustic cell 40 using the associated mass flow meter 25 in a known manner.

As is known, a graphical representation can be made between the mole fraction **(x)** and sensor frequency ratio (speed of sound ratio) for a given binary gas composition using an acoustic cell. Using the second acoustic cell 50, the frequency ratio, $\overline{\text{c}}$_{*o*}/$\overline{\text{c}}$, can therefore be determined by measuring the speed of sound in the bypass mode using the bypass line 38, and the speed of sound for the reacted gas combination exhausted through the outlet port 18 of the reactor using valves 32, 34, 36. The reacted fraction (Δ) is then calculated from equation (28) or can be deduced from the graphical representation of Fig. 3.

The reacted fraction (Δ) provides the reaction efficiency of the CVD reactor 10. Subsequently, the total number of atoms deposited over time in the reactor can be determined by the following equation: 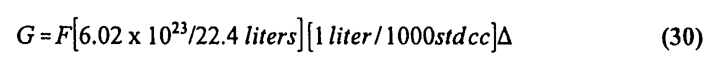 where
G = total number of atoms deposited over unit time; e.g. (# atoms / min)
F= the measured flow rate of precursor into the reactor inlet (std cc/min);
6.02 x 10²³ is Avogadro's number; and 22.4 liters is the molar gas volume at standard temperature and pressure;
Δ=reacted fraction of precursor.

In general, the mass flow rate (F) of precursor is derived from and/or measured by the input's mass flow controller 25 and the inlet's measured (or controlled) mole fraction, ***x***, using the acoustic cell 40. 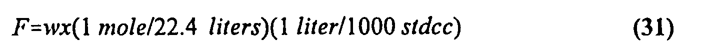 in which:
w= measured flow rate of input precursor (sccm); and
x= mole fraction of precursor in the inlet.

Once the total number of atoms deposited over time, G, is known, then, a volumetric growth rate can be calculated as follows: 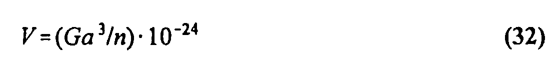 in which:
V = volumetric growth rate (cm³/min)
a = lattice parameter (angstroms, Å = 10⁻⁸cm)
n = number of atoms in a unit cell.

The coefficients for a and n are commonly available from standard tables, such as the CRC Handbook of Chemistry and Physics. By knowing the substrate area, the volumetric growth rate (V) can be recalculated as the rate of thickness increase of the substrate(s): 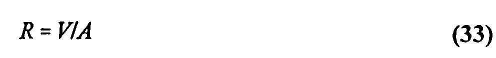 in which
R= the rate of substrate thickness increase (cm/min);and
A = substrate area (cm²)

A key assumption of the above relationship is that the only surfaces in which decomposition takes place in the CVD reactor 10 are substrates 30. In reality, and depending on the size and flow conditions within the reactor 10, a relatively small portion of the ligand will react at undesirable surface locations within the reactor. Therefore, this small amount of surface area must be accounted for in the preceding calculation.

The thickness of the thin film, T, deposited on the substrate is therefore equal to the below time-integrated expression: 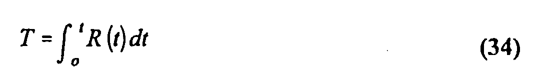 where the limits of the integral are from the start of the deposition, 0, to the end of the deposition process, t.

In the described reaction equation, tungsten hexafluoride (WF₆) and hydrogen carrier gas (H₂) combine to form a solid deposit of tungsten wherein hydrogen fluoride (HF) is the exhausted product. As a result of inefficiency (less than 100% reaction) in the reaction chemistry, it is normal for each of the precursor and carrier gas components to also be a portion of the exhausted products from the reactor. It is the measurement of the reacted and unreacted percentages of the exhausted components which is now a described feature of the present invention.

Assuming the reactor's efficiency to be labeled as E, there are two components to the exhaust stream. First, the unreacted fraction of the input, referred to as (1-E), is directly exhausted and is in terms of the input mass flow calculated as:

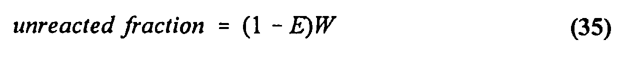

Where W is the measured flow rate of the input precursor (sccm).

The volatile reaction by-products are calculated from the known decomposition reaction (equation (29)) and the reactor's measured efficiency, E; previously derived using equation (28) and a nomograph such as depicted in Fig. 3, or a calculating machine to determine the reacted fraction from the measureables. This calculation is derived from the chemical reaction and the chemical balance of the particular disassociation process, starting from the mass quantity reacted.

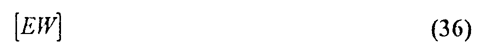

It can be shown that: 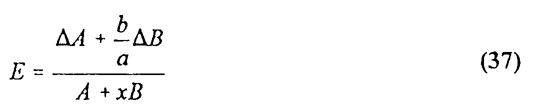 in the context of the generic reaction equation (12) $\text{aA} \text{+} \text{bB} \text{⇄} \text{cC} \text{+} \text{dD} \text{.}$

The chemical breakdown equations form the basis of the calculation of each of the individual reaction components being exhausted. There may be several reaction components created by the reaction, each of which must be calculated according to its particular molecular weight and mass balance considerations.

We have solid deposit 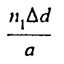 of species D, and gas phase exhaust, comprising 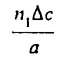 of species C, (1-Δ)*n*_{*1*} of species A, and 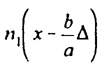 of species B.

From the aforementioned discussion, it is clear that x can be inferred from the binary gas analysis of the inlet sample and Δ (reacted product fraction) from the gas analysis of the exhaust sample.

From the knowledge of mass flow of species A, n₁ can be deduced (moles/unit time). Then the composition of the exhaust stream is completely known in terms of its constituents and the respective weights of each. Thus, 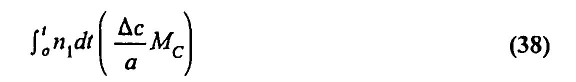 yields the number of gms of species C exhausted in the time interval ***t*** . Similar relations hold for the remaining species in the exhaust stream.

It should be noted that any means of quantitative analysis capable of measuring relative composition with accuracy and stability for the input gasses and the byproducts found in the exhaust may be substituted for the acoustic cells.

For example, a pair of mass spectrometers specifically tuned for the particular binary gas combination can be substituted for the acoustic cells 40, 50. Utilization can be calculated by measuring the gas composition at each mass spectrometer location and subtracting the relative amounts of precursor gas (WF₆)found at each spectrometer, inlet and outlet. Once the utilization factor has been calculated, the growth rate on the substrate is determined as above.

Alternately, one or more infrared spectrometers, or FTIRs (Fourier Transform Infrared Spectrometers), may be used to measure the precursor density at the inlet and outlet to determine the utilization factor. The utilization factor can then be used to determine the growth rate on the substrate in the reactor.

### PARTS LIST FOR FIGS. 1-8

- 10: reactor
- 10A: reactor
- 12: housing
- 14: cavity
- 15: liquid precursor source
- 16: inlet port
- 17: liquid injector
- 18: outlet port
- 20: gas bottle
- 20A: gas bottle
- 22: bubble chamber
- 23: head space
- 24: mass flow controller
- 25: mass flow controller
- 26: thermometers
- 27: mass flow controller
- 28: heater element
- 29: carrier gas source
- 30: substrate
- 31: regulator
- 32: valve
- 33: valve
- 34: valve
- 35: solenoid leak valve
- 36: valve
- 37: vaporizer
- 38: by-pass line
- 40: acoustic cell
- 41: analyzer
- 42: back pressure controller
- 43: flow restrictions
- 44: housing
- 45: pressure gauge
- 46: acoustic cavity
- 47: exhaust pump
- 48: acoustic cavity
- 50: acoustic cell
- 52: acoustic cavity
- 54: diaphragm
- 56: diaphragm
- 58: O-ring
- 60: groove
- 62: gas-inlet tube
- 64: gas inlet
- 66: mounting holes
- 68: microphone, driver
- 70: microphone, receiver
- 74: gas-outlet tube
- 76: gas outlet
- 77: platinum RTD
- 84: end washers
- 86: housing
- 90: chamber

While the present invention has been described according to a preferred embodiment, it will be realized that other modifications and changes can be made within the spirit and scope of the appended claims.

## Claims

1. A method of determining the reaction efficiency of a chemical vapor deposition of a reactive gas reactor, said gas leaving a solid reaction product deposited as a thin film onto a substrate in said reactor, the method comprising the steps of:
measuring the gas composition at the outlet of said reactor; and
determining the reacted fraction of precursor from inlet and outlet gas compositions.

2. A method as recited in Claim 1, wherein said gas includes at least one reactive precursor.

3. A method as recited in Claim 1, wherein said gas includes a mixture at least one reactive precursor and at least one carrier gas, said method including the additional steps of:
controlling the inlet composition of said mixture; and
determining the reacted fraction from the measured inlet and outlet gas compositions.

4. A method as recited in Claim 3, including an acoustic cell at the outlet of said reactor, said method including the additional steps of:
determining the speed of sound of the unreacted gas composition at the outlet port;
determining the speed of sound of the reacted gas composition at the outlet port;
calculating the ratio of the measured speed of sounds of the reacted and unreacted gas compositions; and
determining the fraction of reacted product using known relationships between the speeds of sound and gas properties, species, and composition.

5. A method as recited in Claim 4, wherein a second acoustic cell is positioned adjacent the inlet of said reactor, said method including the steps of:
controlling the mass fraction of precursor gas entering said reactor using said second acoustic cell; measuring the speed of sound adjacent the outlet of said reactor of the reacted gas combination using the second acoustic cell;
measuring the speed of sound using the second acoustic cell of an unreacted gas combination;
calculating the ratio of the speeds measured by the second acoustic cell; and
calculating the fraction of reacted product in the reactor.

6. A method as recited in Claim 4, for a binary gas combination of a precursor and a carrier gas, in which the fraction of reacted product is determined using the relationship: 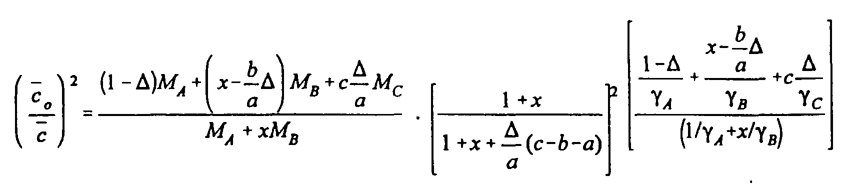 for the general chemical reaction equation: $\text{aA} \text{+} \text{bB} \text{⇄} \text{cC} \text{+} \text{dD}$in which:
$\overline{\text{c}}$_{*o*} is the speed of sound of the unreacted gas mixture;
$\overline{\text{c}}$ is the speed of sound of the reacted gas mixture;
*M*_{*A*}, *M*_{*B*}, and *M*_{*C*} are the molecular weights of the reaction components;
Δ is the fraction of the solid component that has reacted;
γ_{*A*}, γ_{*B*}, and γ_{*C*} are the specific heat rates of the reacted components; and
**x** is the mole fraction of the entering precursor in the binary gas mixture.

7. A method of determining the growth rate of a thin film onto a substrate in a reactor based on a chemical vapor deposition of a reactive gas entering said reactor, the method comprising the steps of:
measuring the composition of the reactive gas at an inlet port of the reactor;
measuring the composition between the reacted gasses and unreacted gasses at an outlet port of the reactor; and
determining the reacted fraction of the precursor gas from the measured compositions at the inlet and the outlet of said reactor;
determining the mass flow rate of precursor entering said reactor; and
determining the rate of reacted product deposited onto said substrate.

8. A method as recited in Claim 7, wherein said reactive gas includes at least one reactive precursor.

9. A method as recited in Claim 7, wherein said gas includes a mixture containing at least one reactive precursor and at least one carrier gas.

10. A method as recited in Claim 9, including means for controlling the mass flow rate of precursor into said reactor, said method including the step of controlling the mass flow rate of precursor to a known value.

11. A method of calculating the composition of gasses exhausted from a chemical vapor deposition reactor, said method comprising the steps of:
measuring the inlet composition of said gas composition;
measuring the composition of the gas mixture at the outlet of said reactor;
determining the reaction efficiency of the reactor from the measured inlet and outlet gas compositions;
determining the unreacted mass fraction of the exhausted gas components;
determining the composition of the reacted gas components; and
adding the reacted and unreacted gas components to determine the total exhausted gasses.

12. A method as recited in Claim 11, wherein the unreacted fraction is calculated from the following relationship:$\text{W (1-E)}$
in which:
W= input mass flow rate of precursor; and
E= reaction efficiency for the chemical reaction $\text{aA} \text{+} \text{bB} \text{⇄} \text{cC} \text{+} \text{dD} \text{.}$

13. An apparatus for determining the reaction efficiency of a chemical vapor deposition reactor, said reactor having a defined cavity for retaining at least one substrate onto which is deposited a solid reaction $\text{(aA + bB ⇄ cC + dD)} \text{,}$product from a reacted binary gas mixture said reactor further including an inlet port and an outlet port, said apparatus comprising:
means for determining the composition of said gas mixture at the outlet port of the reactor;
means for determining the composition of said gas mixture at the inlet port of the reactor;
wherein said outlet composition determining means is an acoustic cell capable of measuring relative differences in the speed of sound for gasses passing therethrough, in which the reacted product is derived from the relation: 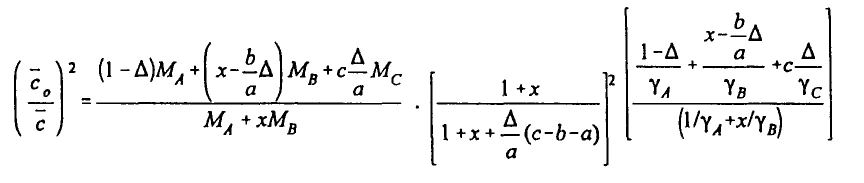 in which:
Δ = reacted product;
*M*_{*A*}, *M*_{*B*}, *M*_{*C*} =molecular weights of A, B, C;
γ_{*A*}, γ_{*B*}, γ_{*c*} =specific heat ratios of A, B, C;
x = mole fraction of A; and 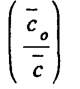
is the measured speed of sound ratio of the gas mixture between a reacted mode and a bypass mode.

14. Apparatus as recited in Claim 13, wherein said inlet determining means is an acoustic cell.

15. Apparatus as recited in Claim 14, wherein said inlet determining means includes at least one mass flow meter for controlling the mole fraction of A entering said inlet port.
